# EUROPEAN PATENT SPECIFICATION

(11) **EP 3 637 079 B1**
(45) Date of publication and mention of the grant of the patent: **05.11.2025**
(21) Application number: 18814275.6
(22) Date of filing: 06.06.2018
(51) Int. Cl.: F17C 13/00, G01M 3/22

(54) **GAS LEAKAGE DETECTION SYSTEM AND GAS LEAKAGE DETECTION**
SYSTEM ZUM DETEKTIEREN VON GASLECKS UND VERFAHREN ZUM DETEKTIEREN VON GASLECKS
SYSTÈME DE DÉTECTION DE FUITE DE GAZ ET PROCÉDÉ DE DÉTECTION DE FUITE DE GAZ

(30) Priority: 06.06.2017 JP 2017111752
(43) Date of publication of application: 15.04.2020
(73) Proprietor: Kawasaki Jukogyo Kabushiki Kaisha, Kobe-shi, Hyogo 650-8670 (JP)
(72) Inventor: UMEMURA, Tomoaki, Kobe-shi, Hyogo 650-8670 (JP); KAWAGUCHI, Jun, Kobe-shi, Hyogo 650-8670 (JP); UNNO, Shuntaro, Kobe-shi, Hyogo 650-8670 (JP)
(74) Representative: Dehns
(86) International application number: PCT/JP2018/021652
(87) International publication number: WO 2018/225762

(56) References cited:
- WO-A2-2004/081519
- CN-A- 103 407 567
- CN-A- 104 019 359
- JP-A- 2006 047 066
- JP-A- 2009 063 313
- JP-A- 2009 063 313
- JP-A- H11 166 698
- JP-U- S59 149 044
- US-A- 4 450 711
- US-A- 6 025 788

## Description

The present invention relates to a gas leakage detection system for, and a gas leakage detection method of, detecting leakage of liquefied gas or boil-off gas in a closed chamber, the boil-off gas being generated as a result of evaporation of the liquefied gas.

Conventionally, there is a known system for supplying liquefied gas such as liquefied natural gas (LNG) or liquefied hydrogen to, for example, a tank or a gas combustion engine.

For example, Japanese Laid-Open Patent Application Publication No. 2017-25736 (Patent Literature 1) discloses a liquefied gas carrier that includes a system for supplying boil-off gas from a cargo tank to a main engine as fuel gas. The gas supply system of the liquefied gas carrier includes a first fuel gas supply line and a second fuel gas supply line. The first fuel gas supply line is provided with a high-pressure gas compressor configured to compress the boil-off gas, which is generated in the cargo tank. The second fuel gas supply line is provided with a high pressure pump and a heater. The high pressure pump pressurizes liquefied gas drawn from the cargo tank. The heater evaporates the pressurized liquefied gas.

The above-described pieces of equipment in the gas supply system are normally installed in a closed chamber. The closed chamber is configured such that it is ventilatable. **In** order to address leakage of gas from piping connected to these pieces of equipment, the closed chamber is provided with a gas detector for detecting the leakage of gas. When the gas detector detects the leakage of gas, a leakage portion from which the gas has leaked needs to be taken care of promptly. However, if, in the closed chamber, there are a plurality of portions at which the leakage of gas is expected to occur, it takes time to specify the leakage portion from which the gas has leaked.

In view of the above, an object of the present invention is to provide a gas leakage detection system and a gas leakage detection method that are capable of promptly specifying the leakage portion.US 4450711 A1 discloses a method and device for remotely detecting leaks or like defects in fluid-tightness in a pipe-line or a like feeder main conveying a fluid and submerged within an ambient or surrounding fluid.
JP 2009063313 A discloses a system for monitoring gas leakage in an indoor space where a gas distribution pipe exists.

Viewed from a first aspect, the present invention provides a gas leakage detection system according to claim 1.

In the above gas leakage detection system, for example, each of the plurality of leakage-expected portions is a valve, a coupling, or a sealing component of equipment, provided on the piping.

According to the above configuration, in a case where the liquefied gas or the boil-off gas has leaked from the piping in the closed chamber, gas generated as a result of evaporation of the leaked liquefied gas, or the leaked boil-off gas, can be assuredly detected by the first gas detector installed at the exhaust port. In addition, since the gas detection sensitivity of each of the second gas detectors is lower than that of the first gas detector, the second gas detectors can be arranged such that, in a case where the liquefied gas or the boil-off gas has leaked from one leakage-expected portion in the closed chamber, the second gas detector that is installed near the one leakage-expected portion, from which the gas has leaked, detects the leaked gas, but the other second gas detectors do not detect the leaked gas. This makes it possible to promptly specify which one of the plurality of leakage-expected portions the gas has leaked from.

Viewed from a second aspect, the present invention provides a gas leakage detection method according to claim 3.

According to the above method, in a case where the liquefied gas or the boil-off gas has leaked from the piping in the closed chamber, gas generated as a result of evaporation of the leaked liquefied gas, or the leaked boil-off gas, can be assuredly detected by the first gas detector installed at the exhaust port. In addition, since the gas detection sensitivity of each of the second gas detectors is lower than that of the first gas detector, the second gas detectors can be arranged such that, in a case where the liquefied gas or the boil-off gas has leaked from one leakage-expected portion in the closed chamber, the second gas detector that is installed near the one leakage-expected portion, from which the gas has leaked, detects the leaked gas, but the other second gas detectors do not detect the leaked gas. This makes it possible to promptly specify which one of the plurality of leakage-expected portions the gas has leaked from.

The present invention makes it possible to provide a gas leakage detection system and a gas leakage detection method that are capable of promptly specifying a leakage portion.

### Brief Description of Drawings

FIG 1 shows a schematic configuration of a liquefied gas carrier including a gas leakage detection system according to one embodiment of the present invention.
FIG 2 is a plan view schematically showing a machinery room of FIG 1.
FIG 3 is a plan view schematically showing the machinery room according to a variation.

### Description of Embodiments

### (Embodiment)

Hereinafter, a gas leakage detection system according to one embodiment of the present invention is described with reference to the drawings.

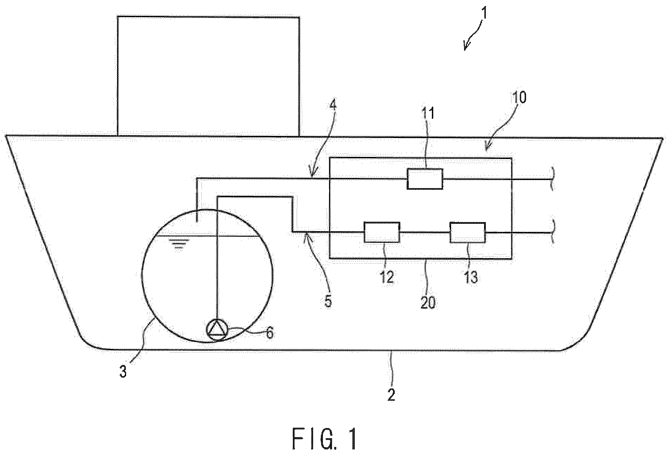

FIG 1 shows a schematic configuration of a liquefied gas carrier 1 including a gas leakage detection system 10 according to the one embodiment. A tank 3, which stores liquefied gas therein, is provided in a hull 2 of the liquefied gas carrier 1. The liquefied gas stored in the tank 3 is, for example, liquefied natural gas or liquefied hydrogen.

The hull 2 is provided with a first discharge line 4 and a second discharge line 5, each of which is formed by piping through which the liquefied gas or boil-off gas flows. The boil-off gas is generated as a result of evaporation of the liquefied gas. The first discharge line 4 and the second discharge line 5 are disposed in the hull 2, such that each of these discharge lines extends from the tank 3 and passes through the inside of a machinery room 20, in which various pieces of equipment are arranged. The gas leakage detection system 10 in the present embodiment detects leakage of the liquefied gas or the boil-off gas in the machinery room 20.

In the machinery room 20, the first discharge line 4 and the second discharge line 5 are provided with various pieces of equipment. In the present embodiment, the first discharge line 4 is provided with an internal compressor 11 of the machinery room 20. The compressor 11, in order to effectively utilize excess boil-off gas generated in the tank 3, compresses the boil-off gas that is led from the tank 3 through the first discharge line 4. That is, in the tank 3, due to transfer of heat from the outside, the liquefied gas is evaporated, and thereby the boil-off gas is generated. The boil-off gas compressed by the compressor 11 is fed to and used by, for example, an unshown ship main engine, unshown ship auxiliary equipment, or an unshown re-liquefier, each of which is connected to the first discharge line 4 at a position downstream of the compressor 11.

In the present embodiment, the second discharge line 5 is provided with an internal evaporator 12 and an internal heater 13 of the machinery room 20. The evaporator 12 and the heater 13 are arranged on the second discharge line 5, such that the evaporator 12 is closer to the tank 3 than the heater 13 is. One end of the second discharge line 5 is connected to a pump 6, which is disposed at the bottom inside the tank 3. The liquefied gas delivered from the pump 6 is fed to the evaporator 12. The liquefied gas is evaporated by the evaporator 12, thereby turning into boil-off gas. The boil-off gas is fed to and heated by the heater 13. After being heated by the heater 13, the heated boil-off gas is fed to and used by, for example, the unshown ship main engine or unshown ship auxiliary equipment, each of which is connected to the second discharge line 5 at a position downstream of the heater 13.

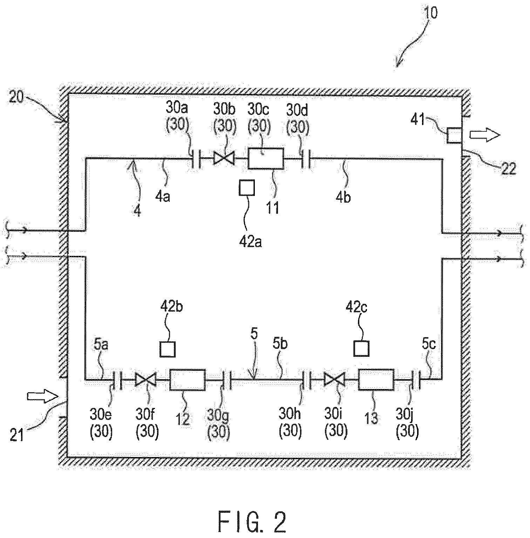

FIG. 2 is a plan view schematically showing the machinery room 20. The machinery room 20 is a closed chamber forming a closed space. The machinery room 20 is configured such that the machinery room 20 is ventilatable. The machinery room 20 is provided with an inlet port 21 and an exhaust port 22, which are disposed at suitable positions, respectively. That is, the air in the machinery room 20 is forcibly discharged through the exhaust port 22 by an unshown ventilator, and also, air is fed into the machinery room 20 through the inlet port 21.

Each of the first discharge line 4 and the second discharge line 5 includes a plurality of leakage-expected portions 30, which are present in the machinery room 20 in a scattered manner. The term leakage-expected portion herein means a portion at which there is a relatively high possibility of leakage of the liquefied gas or the boil-off gas flowing through the piping. In the present embodiment, each of the plurality of leakage-expected portions 30 is a valve, a coupling, or a sealing component of equipment, provided on the piping forming the first discharge line 4 or the second discharge line 5. The sealing component is, for example, a component that seals the leakage of the liquefied gas or the boil-off gas between sliding surfaces of, for example, a rotating machine or a reciprocating machine, such as a compressor or a pump.

Specifically, the first discharge line 4 is provided with the following leakage-expected portions 30: a flange coupling 30a and a cutoff valve 30b, which are positioned on a pipe portion 4a upstream of the compressor 11; a sealing component 30c of the compressor 11; and a flange coupling 30d, which is positioned on a pipe portion 4b downstream of the compressor 11. Also, the second discharge line 5 is provided with the following leakage-expected portions 30: a flange coupling 30e and a cutoff valve 30f, which are positioned on a pipe portion 5a upstream of the evaporator 12; a flange coupling 30g, a flange coupling 30h, and a cutoff valve 30i, which are positioned on a pipe portion 5b between the evaporator 12 and the heater 13; and a flange coupling 30j, which is positioned on a pipe portion 5c downstream of the heater 13. It should be noted that, in the description below, each of these "flange couplings", "cutoff valves", and "sealing component" is referred to as a "leakage-expected portion". When the description below refers to any one of the leakage-expected portions 30a to 30j, the one leakage-expected portion is referred to as a "leakage-expected portion 30".

In the present embodiment, these leakage-expected portions 30a to 30j are arranged in a concentrated manner at a plurality of positions in the machinery room 20. FIG. 2 shows one example of the arrangement of the leakage-expected portions 30. In this example, the leakage-expected portions 30a to 30d are arranged such that they are concentrated near the compressor 11; the leakage-expected portions 30e to 30g are arranged such that they are concentrated near the evaporator 12; and the leakage-expected portions 30h to 30j are arranged such that they are concentrated near the heater 13.

In order to detect leakage of the liquefied gas or the boil-off gas from the leakage-expected portions 30a to 30j, the gas leakage detection system 10 includes a first gas detector 41 and a plurality of (in this example, three) second gas detectors 42a to 42c.

The first gas detector 41 is installed at the exhaust port 22. In a case where leakage of the liquefied gas or the boil-off gas has occurred in the machinery room 20, gas generated as a result of evaporation of the leaked liquefied gas, or the leaked boil-off gas (hereinafter, each of these gases is simply referred to as "leaked gas") always passes through the exhaust port 22. Accordingly, the leaked gas can be detected assuredly by setting the detection sensitivity of the first gas detector 41 high (i.e., by setting the detectable concentration low) so that whichever leakage-expected portion 30 in the machinery room 20 the gas has leaked from, the leaked gas will be detected.

For example, the detectable concentration of the first gas detector 41 is determined by computational fluid dynamics (CFD) analysis. Specifically, first, for each of the leakage-expected portions 30a to 30j, a minimum leakage speed of a leaked fluid is estimated based on, for example, an expected leakage hole diameter and an operating pressure or design pressure. Then, a minimum leakage amount Q1 per unit time is calculated based on the estimated minimum leakage speed. Next, the CFD analysis is performed by using the calculated minimum leakage amount Q1 and a ventilation amount Q2 (e.g., the amount of air discharged from the exhaust port 22 per unit time) as boundary conditions, and thereby the concentration of the leaked gas at a position where the first gas detector 41 is installed is predicted. In this manner, a safety factor is set for the predicted gas concentration, and the detectable concentration is determined so that whichever leakage-expected portion 30 in the machinery room 20 the gas has leaked from, the leakage of the gas can be detected by the first gas detector 41.

Each of the second gas detectors 42a to 42c is installed near a plurality of leakage-expected portions 30. Specifically, the second gas detector 42a is installed near the leakage-expected portions 30a to 30d, which are adjacent to each other. The second gas detector 42b is installed near the leakage-expected portions 30e to 30g, which are adjacent to each other. The second gas detector 42c is installed near the leakage-expected portions 30h to 30j, which are adjacent to each other.

The expression "near the leakage-expected portions 30" herein means being positioned within such a range that gas leakage from the leakage-expected portions 30 can be detected. That is, the second gas detector 42a is installed at such a position that whichever one of the leakage-expected portions 30a to 30d the boil-off gas has leaked from, the second gas detector 42a can detect the leakage of the gas. The second gas detector 42b is installed at such a position that whichever one of the leakage-expected portions 30e to 30g the liquefied gas or the boil-off gas has leaked from, the second gas detector 42b can detect the leakage of the gas. The second gas detector 42c is installed at such a position that whichever one of the leakage-expected portions 30h to 30j the boil-off gas has leaked from, the second gas detector 42c can detect the leakage of the gas.

In the present embodiment, the gas detection sensitivity of each of the second gas detectors 42a to 42c is lower than that of the first gas detector 41. The second gas detectors 42a to 42c are arranged such that when the liquefied gas or the boil-off gas has leaked from one leakage-expected portion 30, only one of the second gas detectors 42a to 42c detects the gas leakage and the other second gas detectors do not detect the gas leakage.

Specifically, the second gas detector 42a detects no leakage of the liquefied gas or the boil-off gas from any of the leakage-expected portions 30d to 30j; the second gas detector 42b detects no leakage of the liquefied gas or the boil-off gas from any of the leakage-expected portions 30a to 30d and 30h to 30j; and the second gas detector 42c detects no leakage of the liquefied gas or the boil-off gas from any of the leakage-expected portions 30a to 30g. However, this shall not apply to cases where the amount of leakage of the liquefied gas or the boil-off gas from the leakage-expected portions 30 is greater than expected. As thus described, suitable arrangement of the second gas detectors 42a to 42c, whose gas detection sensitivity is lower (i.e., whose detectable concentration is higher) than that of the first gas detector 41, makes it possible to specify whether the gas has leaked from the leakage-expected portions 30a to 30d, or the leakage-expected portions 30e to 30g, or the leakage-expected portions 30g to 30j.

It should be noted that not only the installation position but also the detectable concentration of each of the second gas detectors 42a to 42c is suitably determined so that each second gas detector detects gas leakage only from its near leakage-expected portions 30 among the leakage-expected portions 30a to 30j, and does not detect gas leakage from the leakage-expected portions 30 that are not positioned near the second gas detector. In the present embodiment, the detectable concentrations of the respective second gas detectors 42a to 42c are the same as each other. However, as an alternative, the detectable concentrations of the respective second gas detectors 42a to 42c may be different from each other. For example, the detectable concentrations of the respective second gas detectors 42a to 42c are lower than the lower explosion limit (LEL). As one example, the detectable concentrations of the second gas detectors 42a to 42c are 25% LEL, 30% LEL, and 50% LEL, respectively. Each of the detectable concentrations of the second gas detectors 42a to 42c is determined, as described above, by taking into account from which leakage-expected portions 30 each of the second gas detectors 42a to 42c is to detect gas leakage. In addition, each of the detectable concentrations of the second gas detectors 42a to 42c is determined also depending on the safety standard of the installation site of each of the second gas detectors 42a to 42c and the method of determining the detectable concentration of the first gas detector 41.

Next, a flow of the detection of gas leakage in the machinery room 20 according to the present embodiment is described with reference to specific examples.

For example, if the boil-off gas leaks from the leakage-expected portion 30a among the leakage-expected portions 30a to 30j, the first gas detector 41 detects the leaked gas. Also, among the three second gas detectors 42a to 42c, the second gas detector 42a positioned near the leakage-expected portion 30a detects the leaked gas. When the first gas detector 41 and the second gas detector 42a detect the gas, ship crews in, for example, the bridge and the engine control room of the liquefied gas carrier 1 are notified of the gas leakage in the machinery room 20 by, for example, a visible and audible alarm. From the fact that the second gas detector 42a has detected the gas, the ship crews can specify that there is a leakage portion in a region near the second gas detector 42a, the region including the leakage-expected portions 30a to 30d. This allows the ship crews to promptly take care of the leakage portion.

For example, even in a case where the liquefied gas or the boil-off gas leaks not from the leakage-expected portions 30a to 30j, the high-sensitivity first gas detector 41 installed at the exhaust port 22 can detect the leaked gas. In this case, even if none of the low-sensitivity second gas detectors 42a to 42c detects the leaked gas, the leaked gas in the machinery room 20 can be assuredly detected.

As described above, in the gas leakage detection system 10 according to the present embodiment, in a case where the liquefied gas or the boil-off gas has leaked in the machinery room 20, the leaked gas can be assuredly detected by the first gas detector 41 installed at the exhaust port 22. In addition, since the gas detection sensitivity of each of the second gas detectors 42a to 42c is lower than that of the first gas detector 41, the second gas detectors 42a to 42c can be arranged such that, in a case where the liquefied gas or the boil-off gas has leaked from one leakage-expected portion 30 in the machinery room 20, the second gas detector that is installed near the one leakage-expected portion 30, from which the gas has leaked, detects the leaked gas, but the other second gas detectors do not detect the leaked gas. This makes it possible to promptly specify which one of the plurality of leakage-expected portions 30a to 30j the gas has leaked from.

### (Variations)

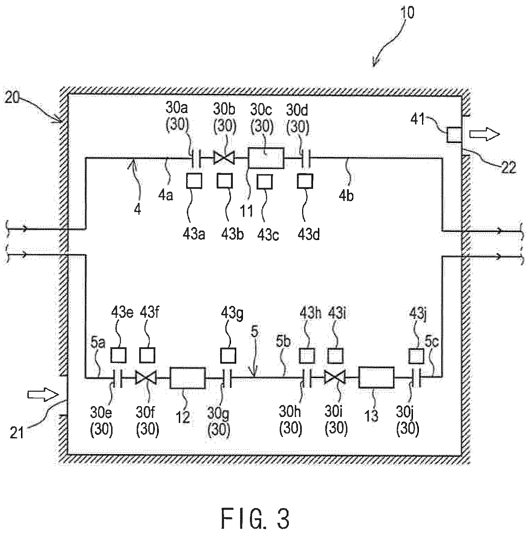

FIG. 3 is a plan view schematically showing the machinery room 20 according to a variation. The machinery room 20 shown in FIG. 3 is different from the above-described embodiment in terms of the number of, and the manner of installation of, second gas detectors installed for detecting leakage from the leakage-expected portions 30. Specifically, in the above-described embodiment, as shown in FIG. 2, each second gas detector is installed near a plurality of leakage-expected portions. On the other hand, in the present variation, each second gas detector is installed near one of leakage-expected portions. Specifically, each of second gas detectors 43a to 43j is installed near a corresponding one of the leakage-expected portions 30a to 30j.

In this case, preferably, the installation position of each second gas detector is determined such that, when the gas leaks not from the leakage-expected portion that is the gas detection target for the second gas detector, but from any of the other leakage-expected portions, the concentration of the leaked gas that reaches the second gas detector is sufficiently low. Also preferably, the detectable concentration of each second gas detector is set such that, when the gas leaks not from the leakage-expected portion that is the gas detection target for the second gas detector, but from any of the other leakage-expected portions, the detectable concentration of the second gas detector is lower than the concentration of the leaked gas that reaches the second gas detector. However, this shall not apply to cases where the amount of leakage of the liquefied gas or the boil-off gas from the leakage-expected portions is greater than expected.

As described above, each second gas detector is installed near a corresponding one of the leakage-expected portions 30a to 30j. This makes it possible to more promptly specify which one of the plurality of leakage-expected portions 30a to 30j the gas has leaked from.

It is not essential that the second gas detectors 43a to 43j be installed corresponding to all the leakage-expected portions 30a to 30j. For example, in a case where two leakage-expected portions among the leakage-expected portions 30a to 30j have a particularly high possibility of leakage, second gas detectors may be installed only near these two leakage-expected portions, respectively. In this case, when one of the two second gas detectors has detected the leaked gas, which one of the two leakage-expected portions having a particularly high possibility of leakage the gas has leaked from can be specified promptly.

For example, the liquefied gas carrier 1 shown in FIG. 1 is illustrated schematically. The shapes of the tank 3 and the machinery room 20, their size relative to the hull 2, etc., are not limited to those shown in FIG. 1. For example, the number of tanks 3 provided in the hull 2 may be plural, and each tank 3 may be disposed in the hull 2 such that the top portion of each tank 3 protrudes upward beyond the upper deck of the hull 2. Also, for example, the machinery room 20 may be provided above the upper deck of the hull 2.

In the above-described embodiment and variation, the first discharge line 4 and the second discharge line 5 (i.e., the two sets of piping forming these discharge lines) are disposed in the hull 2, such that each of these discharge lines passes through the inside of the machinery room 20. However, the number of sets of piping, through which the liquefied gas or the boil-off gas generated as a result of evaporation of the liquefied gas flows, need not be two, but may be one or three or more in the machinery room 20. For example, the piping passing through the machinery room 20 may be the piping that forms either one of the first discharge line 4 or the second discharge line 5.

In the above-described embodiment and variation, the machinery room 20 of the liquefied gas carrier is taken as one example of the closed chamber, in which the plurality of leakage-expected portions are present in a scattered manner. However, the present invention is applicable not only to the machinery room 20, but also to other closed chambers that are configured in a ventilatable manner. The present invention is also applicable to closed chambers of on-land facilities.

### Reference Signs List

- 1: liquefied gas carrier
- 2: hull
- 3: tank
- 4: first discharge line
- 5: second discharge line
- 10: gas leakage detection system
- 20: machinery room (closed chamber)
- 21: inlet port
- 22: exhaust port
- 30 (30a to 30j): leakage-expected portion
- 41: first gas detector
- 42a to 42c: second gas detector
- 43a to 42j: second gas detector

## Claims

1. A gas leakage detection system (10) comprising:
a closed chamber (20) included in a hull (2) or in an on-land facility, the closed chamber including an inlet port (21) and an exhaust port (22) and being configured such that the closed chamber is ventilatable; and
piping (4, 5) through which liquefied gas or boil-off gas generated as a result of evaporation of the liquefied gas flows,
the piping includes a plurality of leakage-expected portions (30) that are present in the closed chamber in a scattered manner; and
a first gas detector (41) installed at the exhaust port and configured to detect leaked gas in a case where leakage of the liquefied gas or leakage of the boil-off gas has occurred in the closed chamber, the leaked gas being either gas generated as a result of evaporation of the leaked liquefied gas or the leaked boil-off gas; and
**characterized in that** the gas leakage detection system further comprises:
at least two second gas detectors (42, 43), each of which is configured to detect the leaked gas, has a gas detection sensitivity lower than that of the first gas detector, and is installed near at least two of the plurality of leakage-expected portions.

2. The gas leakage detection system according to claim 1, wherein
each of the plurality of leakage-expected portions (30) is a valve, a coupling, or a sealing component of equipment, provided on the piping (4, 5).

3. A gas leakage detection method of detecting leaked gas in a closed chamber (20), the closed chamber being included in a hull (2) or in an on-land facility, the method comprising
in a case where gas has leaked from one of a plurality of leakage-expected portions (30) that are present in the closed chamber in a scattered manner,
detecting the gas by a first gas detector (41) installed at an exhaust port (22) of the closed chamber; the method being **characterized by**:
detecting the gas by one of a plurality of second gas detectors (42, 43), each of which is installed in the closed chamber and has a gas detection sensitivity lower than that of the first gas detector, the one second gas detector being installed near the one leakage-expected portion, from which the gas has leaked.

## Patentansprüche

1. System zum Detektieren von Gaslecks (10), umfassend:
eine geschlossene Kammer (20), die in einem Rumpf (2) oder in einer Anlage an Land eingeschlossen ist, wobei die geschlossene Kammer eine Einlassöffnung (21) und eine Auslassöffnung (22) einschließt und so konfiguriert ist, dass die geschlossene Kammer belüftbar ist; und
Rohrleitungssystem (4, 5), durch die verflüssigtes Gas oder Boil-off-Gas, das infolge von Verdampfung des verflüssigten Gases erzeugt wurde, strömt,
wobei das Rohrleitungssystem eine Vielzahl von Leckage-anfälligen Abschnitten (30) einschließt, die in der geschlossenen Kammer verstreut vorhanden sind; und
einen ersten Gasdetektor (41), der an der Auslassöffnung installiert und dazu konfiguriert ist, in einem Fall, in dem ein Leck des verflüssigten Gases oder ein Leck des Boil-off-Gases in der geschlossenen Kammer aufgetreten ist, ausgetretenes Gas zu detektieren, wobei das ausgetretene Gas entweder Gas ist, das infolge der Verdampfung des ausgetretenen verflüssigten Gases oder des ausgetretenen Boil-off-Gases erzeugt wurde; und
**dadurch gekennzeichnet, dass** das System zum Detektieren von Gaslecks weiter Folgendes umfasst: mindestens zwei zweite Gasdetektoren (42, 43), von denen jeder dazu konfiguriert ist, das ausgetretene Gas zu detektieren, eine Gasdetektionsempfindlichkeit aufweist, die niedriger ist als die des ersten Gasdetektors, und in der Nähe von mindestens zwei der Vielzahl von Leckage-anfälligen Abschnitte installiert ist.

2. System zum Detektieren von Gaslecks nach Anspruch 1, wobei
jeder der mehreren Leckage-anfälligen Abschnitte (30) ein Ventil, eine Kupplung oder eine Dichtungskomponente einer Vorrichtung ist, die an dem Rohrleitungssystem (4, 5) bereitgestellt ist.

3. Verfahren zum Detektieren von Gaslecks zum Detektieren von ausgetretenem Gas in einer geschlossenen Kammer (20), wobei die geschlossene Kammer in einem Rumpf (2) oder in einer Anlage an Land eingeschlossen ist, das Verfahren umfassend
in einem Fall, in dem Gas aus einem von einer Vielzahl von Leckage-anfälligen Abschnitten (30), die in der geschlossenen Kammer verstreut vorhanden sind, ausgetreten ist,
Detektieren des Gases durch einen ersten Gasdetektor (41), der an einer Auslassöffnung (22) der geschlossenen Kammer installiert ist; wobei das Verfahren **gekennzeichnet ist durch**:
Detektieren des Gases **durch** einen von einer Vielzahl von zweiten Gasdetektoren (42, 43), von denen jeder in der geschlossenen Kammer installiert ist und eine Gasdetektionsempfindlichkeit aufweist, die geringer ist als die des ersten Gasdetektors, wobei der eine zweite Gasdetektor in der Nähe des einen Leckage-anfälligen Abschnitts installiert ist, aus dem das Gas ausgetreten ist.

## Revendications

1. Système (10) de détection de fuite de gaz comprenant :
une chambre (20) fermée incluse dans une coque (2) ou dans une installation à terre, la chambre
fermée incluant une ouverture (21) d'alimentation en air et une ouverture (22) d'évacuation en air et étant configurée de sorte qu'une ventilation est possible dans la chambre fermée ; et
un tuyau (4, 5) à travers lequel du gaz liquéfié ou du gaz d'évaporation est généré à la suite de l'évaporation des flux de gaz liquéfiés,
le tuyau inclut une pluralité d'emplacements (30) de fuite probable qui sont présents dans la chambre fermée de manière dispersée ; et
un premier détecteur (41) de gaz installé au niveau de l'ouverture d'évacuation d'air et configuré pour détecter un gaz qui fuit dans un cas où une fuite du gaz liquéfié ou une fuite du gaz d'évaporation s'est produite dans la chambre fermée, le gaz qui fuit étant soit du gaz généré à la suite de l'évaporation du gaz liquéfié qui fuit, soit du gaz d'évaporation qui fuit ; et
**caractérisé en ce que** le système de détection de fuite de gaz comprend en outre :
au moins deux seconds détecteurs (42, 43) de gaz, dont chacun est configuré pour détecter le gaz qui fuit, présente une sensibilité de détection de gaz inférieure à celle du premier détecteur de gaz, et est installé près d'au moins deux de la pluralité d'emplacements de fuite probable.

2. Système de détection de fuite de gaz selon la revendication 1, dans lequel
chacun de la pluralité d'emplacements (30) de fuite probable est une vanne, un accouplement ou un composant d'étanchéité d'équipement, prévu sur le tuyau (4, 5).

3. Procédé de détection de fuite de gaz de détection de gaz qui fuit dans une chambre (20) fermée, la chambre fermée étant incluse dans une coque (2) ou dans une installation à terre, le procédé comprenant
dans un cas où du gaz a fui de l'un d'une pluralité d'emplacements (30) de fuite probable qui sont présents dans la chambre fermée de manière dispersée,
la détection du gaz par un premier détecteur (41) de gaz installé au niveau d'une ouverture (22) d'évacuation d'air de la chambre fermée ; le procédé étant **caractérisé par** :
la détection du gaz par l'un d'une pluralité de seconds détecteurs (42, 43) de gaz, chacun d'entre eux étant installé dans la chambre fermée et présentant une sensibilité de détection de gaz inférieure à celle du premier détecteur de gaz, le premier second détecteur de gaz étant installé à proximité de l'un emplacement de fuite probable, à partir duquel le gaz a fui.
